# EUROPEAN PATENT SPECIFICATION

(11) **EP 3 971 003 B1**
(45) Date of publication and mention of the grant of the patent: **17.04.2024**
(21) Application number: 21197955.4
(22) Date of filing: 21.09.2021
(51) Int. Cl.: B60J 1/14, B60J 1/20, E06B 9/54, E06B 9/42

(54) **A FIXTURE WITH AN OPENING HAVING REDUCED DIMENSIONS FOR VEHICLE WALLS**
HALTERUNG MIT EINER ÖFFNUNG MIT REDUZIERTEN ABMESSUNGEN FÜR FAHRZEUGWÄNDE
ACCESSOIRE PRÉSENTANT UNE OUVERTURE AYANT DES DIMENSIONS RÉDUITES POUR LES PAROIS DE VÉHICULE

(30) Priority: 22.09.2020 IT 202000022282
(43) Date of publication of application: 23.03.2022
(73) Proprietor: F.A.P. S.R.L., 50142 Firenze (IT)
(72) Inventor: ERMINI, Massimo, 50139 FIRENZE (IT)
(74) Representative: Savi, Massimiliano

(56) References cited:
- EP-A1- 0 867 590
- DE-A1- 19 651 618
- DE-U1- 8 503 118
- DE-U1-202015 105 335

## Description

### FIELD OF THE INVENTION

The invention relates to a door, in particular a window, with an opening having reduced dimensions for vehicle walls, in particular for vehicles such as motor homes, caravans, mobile homes, boats and other.

### TECHNICAL PRIOR ART

It is known in the field of motor homes (or in the nautical field) that the walls of the vehicles are often made by means of composite materials, obtained by two stiff panels made of relatively lightweight material such as, for example, aluminum (on the outside) and wood (on the inside), and a thick inner layer of insulating and lightweight material such as, for example, polystyrene.

The openings made on walls of this type, in order to obtain, for example, windows, doors and hatches, must take into account the poorly robust structure of the walls. For this reason the openings are provided with fixtures applied externally and protruding from the walls, which are fastened by means of screws adapted to be engaged with the whole thickness of the wall itself or at least with the outermost and most resistant layer, generally made of aluminum. Examples of such fixtures can be found in DE 19651618 A1, DE 8503118 U1 or DE 202015105335 U1. Considering the particular application of such fixtures, the drawback generally given by the fact that such fixtures protrude externally from the body of the vehicle to which they are applied, is noted.

This fact may give rise to problems associated with the external dimensions of the fixture and also be the source of imperfections in appearance.

In addition to this, in the prior art, the fixing means of the fixtures applied to walls made of a composite material are external and this results in the risk of tampering and vandalism.

Therefore, it is an object of the present invention to overcome the drawbacks of the prior art by means of a fixture for vehicles in the field of motor homes or in the nautical field, which has a greater integration with the body of the vehicle to which it is applied and an improved appearance.

It is a further object of the present invention to achieve the aforesaid effect in a rational, cost-effective manner.

### BRIEF SUMMARY OF THE INVENTION

The present invention achieves the objects with a fixture for walls made of a multi-layer composite material, according to claim 1.

By virtue of this, it is possible to make a fixture, in particular, a very compact window, with significantly reduced dimensions, in particular, on the outer side of the wall to which it is applied.

In fact, the closing element, which is typically see-through, is integrated flush with the wall of the vehicle to which it is applied, reducing, or minimizing the dimensions and therefore improving the esthetics.

A further advantage comes from the fact that the fixture according to the present invention does not require fixing means outside the wall made of a composite material onto which said fixture is mounted.

The advantages in terms of dimensions are even more apparent when the same advantageous support structure is used to accommodate a roller mechanism onto which a barrier winds, which barrier is of the curtain-, obscuring film-,barrier film-, mosquito net-type or similar for at least partially closing also the second open side of the space.

Further features of the invention are the subject of the dependent claims.

### BRIEF DESCRIPTION OF THE DRAWINGS

Further features and advantages of the invention will be more apparent in the light of the following detailed description, with the aid of the accompanying drawings, in which:

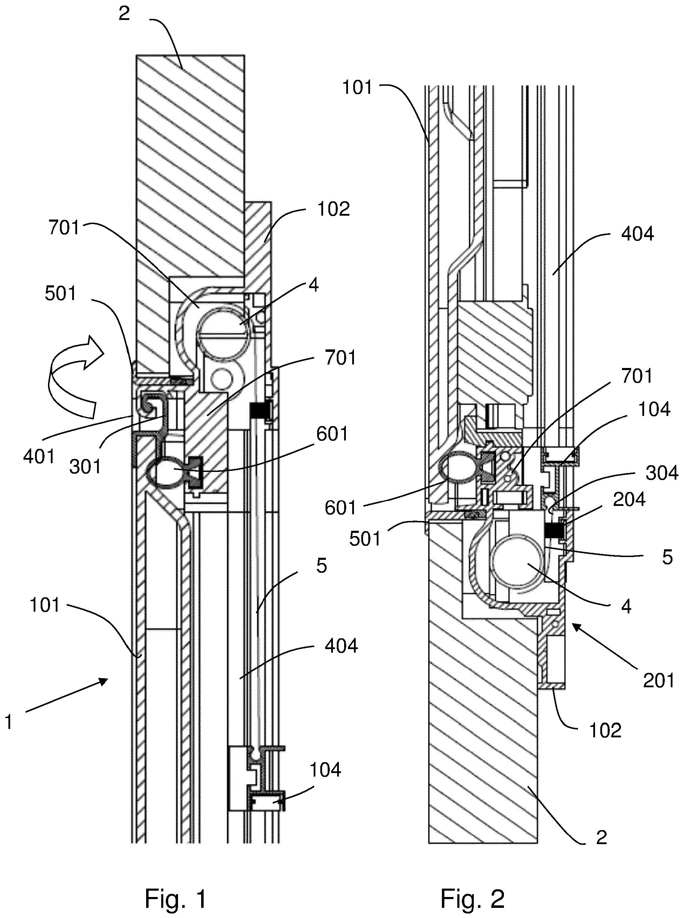

Figure 1 is a sectional side view of the upper part of the fixture according to an embodiment of the invention with the see-through panel in the closed position;
Figure 2 is a sectional side view of the lower part of the fixture in the previous figure;
Figure 3 shows a front axonometric view of the fixture in the previous figures.
Figure 4 shows a rear axonometric view of the fixture in the previous figures.

The following description of exemplary embodiments refers to the accompanying drawings. The same reference numerals in the various drawings identify the same elements or similar elements. The following detailed description does not limit the invention. The scope of the invention is defined by the appended claims.

### DETAILED DESCRIPTION OF CERTAIN PREFERRED EMBODIMENTS OF THE PRESENT INVENTION

The invention will now be described with reference to the appended figures, which show sectional side views and axonometric views of the fixture according to an embodiment of the invention, with the closing element 101 in the closed position, where the fixture is globally denoted with reference numeral 1.

In this embodiment, the fixture is a window, for example, of a camper van, a caravan, a mobile home and similar, which opens from the bottom upwards. However, the invention should not be considered limited to this specific example as the teachings can indeed be applied to doors, window-doors, hatches both for recreational vehicles, such as camper vans, caravans, mobile homes and for land, nautical or aeronautical vehicles, which open in any way.

With reference to the figures, the window 1 comprises a frame support structure 201 adapted to be housed inside an opening in the wall 2. Thereby, a space 3 is defined in the thickness 201 of the wall 2, which is open towards the inside and towards the outside of the window 1 and surrounded by the support structure 201.

Advantageously, the support structure 201 can comprise means for fixing to the inner side of the wall 2. These fixing means can be made by means of one or more flanges 102 provided with holes for accommodating screws, rivets or other similar means, or by means of a plurality of tongues 102 also provided with holes for accommodating screws, rivets or other similar means. Alternatively, the flange and/or tongues can be devoid of holes and configured to be fastened to the inner panel of the wall by means of glue, silicone or other similar sealants.

Advantageously, the support structure 201 can be provided with an edge 501 adapted to connect and seal the support structure 201 to the edge of the opening in the wall 2.

Advantageously, the outer side of the space 3 is closed by a closing element 101, for example, made of a see-through material, such as plexiglass, tilting between a first closing position of the outer side of the space 3 and a second opening position of the outer side of the space 3. Such closing element 101 is connected to the support structure 201 by means of a hinge comprising at least a "C"-shaped arm 301 adapted to be contained inside a housing 401 of the support structure 201 when the closing element 101 is in the first closing position, so that the closing element 101 is substantially coplanar and not protruding with respect to the wall 2. The "C"-shaped arm, in the configuration shown in the figures, allows the closing element to tilt about the upper horizontal end 202 of the window, but obviously, the tilting can be about any axis depending on the type of fixture to be made.

One or more gaskets 601 can be present to favor a seal closing of the closing element 101. To this end, the support structure 201 can have an inner perimeter appendage 701, with which the closing element 101 abuts, when it is in the closed position, by means of one or more sealing gaskets 601.

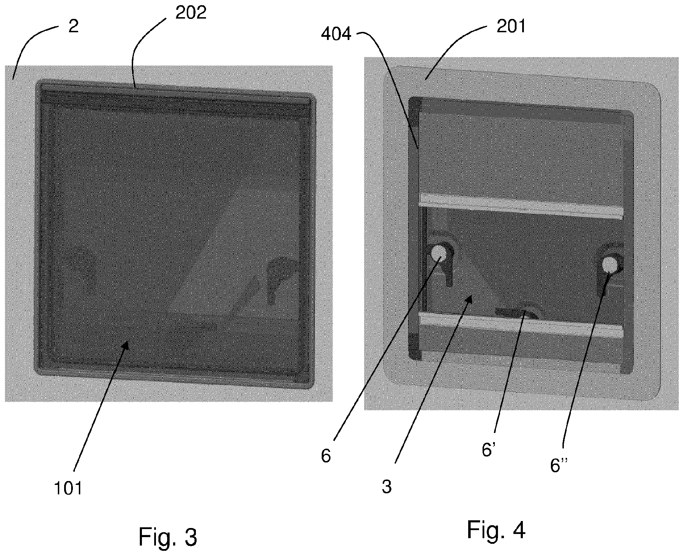

One or more levers 6, 6', 6ʺ can also be present for locking the closing element 101 to the support structure 201 as shown in Fig. 4.

The window comprises at least one roller mechanism contained inside the support structure 201 onto which a barrier 5 winds, which barrier is of the curtain-, obscuring film-, barrier film-, mosquito net-type or similar, and control means 104 for undwinding/rewinding said curtain or said obscuring film or barrier 5 for at least partially closing the open inner side of the space 3.

The roller mechanism comprises a rotary roller 4 onto which the barrier 5 winds. In the configuration shown in the figures, the roller 4 is positioned inside a substantially cylindrical-shaped case 701 and comprising a terminal section bar 204 with a cross-section having a beak or rounded right angle for deviating the barrier 5 towards an outlet slot 304 to which vertical sliding guides 404 of the barrier 5 are connected.

The control means of the barrier 5 typically comprise a section bar 104 fixed to one end of the barrier and elastic means coupled to the roller 4 (not visible in the figures) so as to exert a recall action of the barrier 5 on the roller 4. The section bar 104 forms a grippable appendage for allowing a user to exert an unwinding action of the barrier 5 from the roller 4 against the action of the elastic means.

In the configuration shown in the figures, the barrier 5 is divided into two parts. In this specific case, not to be considered limiting of the protective scope of the present invention, the roller mechanism comprises a pair of opposing rotary rollers 4 each adapted to wind one of the two parts of the barrier. Each roller is positioned inside a corresponding substantially cylindrical-shaped case 701 and arranged on opposite sides of the space 3. In this case, the control means comprise a pair of section bars 104. Each section bar 104 is fixed to one end of a part of barrier 5 so that the closure of the open inner side of the space 3 occurs when the two section bars 104 are brought into contact, the one on top of the other.

In a first configuration, the barrier comprises a mosquito net. In an alternative embodiment, the barrier comprises an obscuring sheet as an alternative or in addition to the mosquito net.

In an embodiment, the fixture comprises at least a first and a second roller mechanism contained inside the support structure, the first roller mechanism being comprised for winding/unwinding a barrier of the curtain-, obscuring film-, barrier film- type or similar, the second roller mechanism being comprised for winding/unwinding a mosquito net and control means for unwinding/rewinding said curtain and said mosquito net for at least partially closing the second open side of the space.

Clearly, changes or improvements dictated by contingent or particular reasons may be made to the invention as described without thereby departing from the protective scope of the invention, as claimed below.

## Claims

1. A fixture (1) for walls made of a multilayer composite material, in particular for vehicles, which fixture comprises a frame support structure (201) adapted to be accommodated inside an opening in the wall (2) without requiring fixing means outside the wall made of a multilayer composite material, so as to define, in the thickness of the wall (2), with the fixture mounted, a space (3) surrounded by the support structure (201), said space (3) being open on a first side and on a second side opposite to the first side, with the first side being recessed with respect to the wall (2), the fixture further comprises a closing element (101) tilting between a first closing position of the first side of the space (3) and a second opening position of the first side of the space (3), said closing element (101) being connected to said support structure (201) by means of a hinge comprising at least a "C"-shaped arm (301) adapted to be contained inside a housing (401) of the support structure (201) when the closing element (101) is in the first closing position, so that the closing element (101) is substantially coplanar to the wall (2), and it further comprises at least one roller mechanism (4) contained inside the support structure (201) onto which a barrier (5) winds, which barrier is of the curtain-, obscuring film-, barrier film-, mosquito net-type or similar, and control means (104) for unwinding/rewinding said curtain or said obscuring film or barrier (5) for at least partially closing the second open side of the space (3).

2. A fixture (1) according to the preceding claim, wherein the roller mechanism comprises a rotary roller (4) onto which the barrier (5) winds, said roller (4) being positioned inside a substantially cylindrical-shaped case (701).

3. A fixture (1) according to the preceding claim, wherein said case (701) comprises a terminal section bar (204) with a cross-section having a beak or a rounded right angle for deviating the barrier (5) towards an outlet slot (304), the fixture (1) comprising vertical sliding guides (404) for the barrier (5), which are connected to said outlet slot (304) of the case (701).

4. A fixture (1) according to one or more of the preceding claims 1 to 2, wherein the control means comprise at least one section bar (104) fixed to one end of the barrier (5) and elastic means coupled to the roller (4) so as to exert a recall action of the barrier (5) on the roller (4), said section bar (104) being grippable to allow an unwinding action of the barrier (5) from the roller (4) against the action of the elastic means.

5. A fixture (1) according to one or more of the preceding claims, wherein the barrier (5) is divided into two parts, the roller mechanism (4) comprising a pair of opposing rotary rollers, each adapted to wind one of the two parts of the barrier, each roller being positioned inside a corresponding substantially cylindrical-shaped case (701) and arranged on opposite sides of the support structure (201).

6. A fixture (1) according to one or more of the preceding claims, wherein the control means comprise a pair of section bars (104), each fixed to one end of a part of barrier (5), the closure of the second open side of the space (3) defined by the support structure (201) occurring when the two section bars (104) are brought into contact, the one on top of the other.

7. A fixture (1) according to one or more of the preceding claims, wherein the support structure (201) comprises means for fixing to the inner side of the wall (2).

8. A window (1) according to the preceding claim, wherein said means for fixing to the inner side of the wall (2) comprise a flange or one or more tongues (102).

9. A fixture (1) according to the preceding claim, wherein said flange and said tongues (102) are provided with holes adapted to accommodate screws, rivets or other similar fixing means.

10. A fixture (1) according to one or more of the preceding claims, wherein the support structure (201) is provided with an edge (501) adapted to connect and seal said support structure (201) to the edge of the opening in the wall (2).

11. A fixture (1) according to one or more of the preceding claims, wherein one or more gaskets (601) are present, adapted to favor a seal closing of the closing element (101).

12. A fixture (1) according to one or more of the preceding claims, wherein the support structure (201) has an inner perimeter appendage (701), which the closing element (101) abuts, when it is in the closed position, by means of one or more sealing gaskets (601).

13. A fixture (1) according to one or more of the preceding claims, **characterized in that** it is a window, the "C"-shaped arm allowing the closing element (101) to tilt about the upper horizontal end (202) of the window.

14. A fixture (1) according to the preceding claim, wherein the barrier (5) comprises a mosquito net, the tilting closing element (101) being made of a see-through material, such as plexiglass.

15. A fixture (1) according to one or more of claims 13 to 14, wherein the barrier (5) comprises an obscuring sheet as an alternative to, or in addition to the mosquito net.

16. A fixture (1) according to one or more of the preceding claims **characterized in that** it further comprises at least a first and a second roller mechanism contained inside the support structure, the first roller mechanism being comprised for winding/unwinding a barrier of the curtain-, obscuring film-, barrier film- type or similar, the second roller mechanism being comprised for winding/unwinding a mosquito net and control means (4) for unwinding/rewinding said curtain and said mosquito net for at least partially closing the second open side of the space.

## Patentansprüche

1. Vorrichtung (1) für Wände aus einem mehrschichtigen Verbundmaterial, insbesondere für Fahrzeuge, wobei die Vorrichtung eine Rahmen-Stützstruktur (201) aufweist, die geeignet ist, in einer Öffnung der Wand (2) untergebracht zu werden, ohne dass Befestigungsmittel außerhalb der Wand aus einem mehrschichtigen Verbundmaterial erforderlich sind, um in der Dicke der Wand (2) mit der montierten Vorrichtung einen Raum definieren (3), der von der Stützstruktur (201) umgeben ist, wobei der Raum (3) auf einer ersten Seite und auf einer zweiten Seite, die der ersten Seite gegenüberliegt, offen ist, wobei die erste Seite in Bezug auf die Wand (2) zurückgesetzt ist, wobei die Halterung außerdem ein Schließelement (101) aufweist, das zwischen einer ersten Schließposition der ersten Seite des Raums (3) und einer zweiten Öffnungsposition der ersten Seite des Raums (3) schwenkbar ist, wobei das genannte Schließelement (101) mit der genannten Stützstruktur (201) über ein Scharnier verbunden ist, das mindestens einen C-förmigen Arm (301) aufweist, der so beschaffen ist, dass er sich im Inneren einer Aufnahme (401) der Stützstruktur (201) befindet, wenn sich das Schließelement (101) in der ersten Schließposition befindet, so dass das Schließelement (101) im Wesentlichen koplanar zur Wand (2) ist, und ferner mindestens einen Rollenmechanismus (4), der im Inneren der Stützstruktur (201) enthalten ist und auf den sich eine Barriere (5) aufwickelt, welche Barriere vom Typ eines Vorhangs, einer Verdunkelungsfolie, einer Sperrfolie, eines Moskitonetzes oder ähnlichem ist, sowie Steuermittel (104) zum Abwickeln/Aufwickeln des Vorhangs oder der Verdunkelungsfolie oder der Barriere (5) aufweist, um die zweite offene Seite des Raums (3) zumindest teilweise zu schließen.

2. Vorrichtung (1) nach dem vorhergehenden Anspruch, wobei der Rollenmechanismus eine drehbare Rolle (4) aufweist, auf die sich die Barriere (5) aufwickelt, wobei die Rolle (4) im Inneren eines im Wesentlichen zylindrisch geformten Gehäuses (701) angeordnet ist.

3. Vorrichtung (1) nach dem vorhergehenden Anspruch, wobei das Gehäuse (701) einen Endprofilstange (204) mit einem Querschnitt aufweist, der einen Schnabel oder einen abgerundeten rechten Winkel hat, um die Barriere (5) in Richtung eines Auslassschlitzes (304) abzulenken, wobei die Vorrichtung (1) vertikale Gleitführungen (404) für die Barriere (5) aufweist, die mit dem Auslassschlitz (304) des Gehäuses (701) verbunden sind.

4. Vorrichtung (1) nach einem oder mehreren der vorangehenden Ansprüche 1 bis 2, wobei die Steuermittel mindestens eine Profilstange (104) aufweisen, die an einem Ende der Barriere (5) befestigt ist, und elastische Mittel, die mit der Rolle (4) gekoppelt sind, um eine Rückholwirkung der Barriere (5) auf die Rolle (4) auszuüben, wobei die Profilstange (104) greifbar ist, um einen Abwickelvorgang der Barriere (5) von der Rolle (4) gegen die Wirkung der elastischen Mittel zu ermöglichen.

5. Vorrichtung (1) nach einem oder mehreren der vorangehenden Ansprüche, wobei die Barriere (5) in zwei Teile geteilt ist, wobei der Rollenmechanismus (4) ein Paar gegenüberliegender drehbare Rollen aufweist, die jeweils dazu geeignet sind, einen der beiden Teile der Barriere aufzuwickeln, wobei jede Rolle im Inneren eines entsprechenden, im Wesentlichen zylindrisch geformten Gehäuses (701) angeordnet ist und auf gegenüberliegenden Seiten der Stützstruktur (201) angeordnet ist.

6. Vorrichtung (1) nach einem oder mehreren der vorhergehenden Ansprüche, wobei die Steuermittel ein Paar von Profilstangen (104) aufweisen, die jeweils an einem Ende eines Teils der Barriere (5) befestigt sind, wobei das Schließen der zweiten offenen Seite des Raums (3), der durch die Stützstruktur (201) definiert ist, erfolgt, wenn die beiden Profilstangen (104) in Kontakt gebracht werden, wobei der eine über dem anderen liegt.

7. Vorrichtung (1) nach einem oder mehreren der vorhergehenden Ansprüche, wobei die Stützstruktur (201) Mittel zur Befestigung an der Innenseite der Wand (2) aufweist.

8. Vorrichtung (1) nach dem vorhergehenden Anspruch, wobei die Mittel zur Befestigung an der Innenseite der Wand (2) einen Flansch oder eine oder mehrere Zungen (102) aufweisen.

9. Vorrichtung (1) nach dem vorhergehenden Anspruch, wobei der Flansch und die Zungen (102) mit Löchern versehen sind, die zur Aufnahme von Schrauben, Nieten oder anderen ähnlichen Befestigungsmitteln geeignet sind.

10. Vorrichtung (1) nach einem oder mehreren der vorhergehenden Ansprüche, wobei die Stützstruktur (201) mit einem Rand (501) versehen ist, der geeignet ist, die Stützstruktur (201) mit dem Rand der Öffnung in der Wand (2) zu verbinden und abzudichten.

11. Vorrichtung (1) nach einem oder mehreren der vorhergehenden Ansprüche, wobei eine oder mehrere Dichtungen (601) vorhanden sind, die geeignet sind, ein dichtes Schließen des Schließelements (101) zu begünstigen.

12. Vorrichtung (1) nach einem oder mehreren der vorhergehenden Ansprüche, wobei die Stützstruktur (201) einen inneren Umfangsfortsatz (701) aufweist, an den das Schließelement (101) in der geschlossenen Stellung mit einer oder mehreren Dichtungen (601) anliegt.

13. Vorrichtung (1) nach einem oder mehreren der vorhergehenden Ansprüche, **dadurch gekennzeichnet, dass** es sich um ein Fenster handelt, wobei der "C"-förmige Arm es dem Schließelement (101) ermöglicht, um das obere horizontale Ende (202) des Fensters zu kippen.

14. Vorrichtung (1) nach dem vorhergehenden Anspruch, wobei die Barriere (5) ein Moskitonetz aufweist, wobei das kippbare Schließelement (101) aus einem durchsichtigen Material, wie beispielsweise Plexiglas, besteht.

15. Vorrichtung (1) nach einem oder mehreren der Ansprüche 13 bis 14, wobei die Barriere (5) alternativ zu oder zusätzlich zu dem Moskitonetz eine Verdunkelungsfolie aufweist.

16. Vorrichtung (1) nach einem oder mehreren der vorhergehenden Ansprüche, **dadurch gekennzeichnet, dass** sie ferner mindestens einen ersten und einen zweiten Rollenmechanismus aufweist, die in der Stützstruktur enthalten sind, wobei der erste Rollenmechanismus zum Auf-/Abwickeln einer Barriere vom Typ eines Vorhangs, einer Verdunkelungsfolie, einer Sperrfolie oder ähnlichem, der zweite Rollenmechanismus zum Auf-/Abwickeln eines Moskitonetzes und Steuermittel (4) zum Ab-/Aufwickeln des Vorhangs und des Moskitonetzes zum zumindest teilweisen Verschließen der zweiten offenen Seite des Raumes vorgesehen sind.

## Revendications

1. Accessoire (1) pour parois en matériau composite multicouche, en particulier pour des véhicules, cet accessoire comprenant une structure de support de cadre (201) pouvant être logée dans une ouverture dans la paroi (2) sans recourir à des moyens de fixation à l'extérieur de la paroi constituée de matériau composite multicouche, de manière à définir, dans l'épaisseur de la paroi (2), avec l'accessoire monté, un espace (3) entouré par la structure de support (201), ledit espace (3) étant ouvert sur un premier côté et sur un second côté opposé au premier côté, avec le premier côté étant encastré par rapport à la paroi (2), l'accessoire comprenant en outre un élément de fermeture (101) basculant entre une première position de fermeture du premier côté de l'espace (3) et une seconde position d'ouverture du premier côté de l'espace (3), ledit élément de fermeture (101) étant relié à ladite structure de support (201) au moyen d'une charnière comprenant au moins un bras en forme de « C » (301) pouvant être contenu dans un logement (401) de la structure de support (201) lorsque l'élément de fermeture (101) est dans la première position de fermeture, de manière à ce que l'élément de fermeture (101) soit sensiblement coplanaire à la paroi (2), et il comprend en outre au moins un mécanisme de rouleau (4) contenu dans la structure de support (201) sur laquelle une barrière (5) s'enroule, cette barrière étant du type rideau, film obscurcissant, film barrière, moustiquaire ou similaires, et des moyens de commande (104) pour enrouler/dérouler ledit rideau ou ledit film obscurcissant ou barrière (5) pour au moins partiellement fermer le second côté ouvert de l'espace (3).

2. Accessoire (1) selon la revendication précédente, dans lequel le mécanisme de rouleau comprend un rouleau rotatif (4) sur lequel la barrière (5) s'enroule, ledit rouleau (4) étant positionné dans un boîtier de forme sensiblement cylindrique (701).

3. Accessoire (1) selon la revendication précédente, dans lequel ledit boîtier (701) comprend une barre de section terminale (204) avec une section transversale ayant un bec ou un angle droit arrondi pour dévier la barrière (5) vers une fente de sortie (304), l'accessoire (1) comprenant des guides coulissants verticaux (404) pour la barrière (5), qui sont reliés à ladite fente de sortie (304) du boîtier (701).

4. Accessoire (1) selon l'une ou plusieurs des revendications précédentes 1 à 2, dans lequel les moyens de commande comprennent au moins une barre de section (104) fixée à une extrémité de la barrière (5) et des moyens élastiques couplés au rouleau (4) de manière à exercer une action de rappel de la barrière (5) sur le rouleau (4), ladite barre de section (104) étant préhensible pour permettre une action de déroulement de la barrière (5) du rouleau (4) contre l'action des moyens élastiques.

5. Accessoire (1) selon l'une ou plusieurs des revendications précédentes, dans lequel la barrière (5) est divisée en deux parties, le mécanisme de rouleau (4) comprenant une paire de rouleaux rotatifs opposés, chacun pouvant enrouler une ou les deux parties de la barrière, chaque rouleau étant positionné dans un boîtier de forme sensiblement cylindrique correspondant (701) et disposé sur des côtés opposés de la structure de support (201).

6. Accessoire (1) selon l'une ou plusieurs des revendications précédentes, dans lequel les moyens de commande comprennent une paire de barres de section (104), chacune fixée à une extrémité d'une partie de barrière (5), la fermeture du second côté ouvert de l'espace (3) défini par la structure de support (201) survient lorsque les deux barres de section (104) sont amenées en contact, l'une sur l'autre.

7. Accessoire (1) selon l'une ou plusieurs des revendications précédentes, dans lequel la structure de support (201) comprend des moyens de fixation sur le côté interne de la paroi (2).

8. Fenêtre (1) selon la revendication précédente, dans laquelle lesdits moyens de fixation sur le côté interne de la paroi (2) comprennent une bride ou une ou plusieurs languettes (102).

9. Accessoire (1) selon la revendication précédente, dans lequel ladite bride et lesdites languettes (102) sont pourvues de trous pouvant loger des vis, des rivets ou d'autres moyens de fixation similaires.

10. Accessoire (1) selon l'une ou plusieurs des revendications précédentes, dans lequel la structure de support (201) est pourvue d'un bord (501) pouvant relier et sceller ladite structure de support (201) au bord de l'ouverture dans la paroi (2).

11. Accessoire (1) selon l'une ou plusieurs des revendications précédentes, dans lequel un ou plusieurs joints (601) sont présents, pouvant favoriser une fermeture d'étanchéité de l'élément de fermeture (101).

12. Accessoire (1) selon l'une ou plusieurs des revendications précédentes, dans lequel la structure de support (201) a un appendice de périmètre interne (701), contre lequel l'élément de fermeture (101) vient buter, lorsqu'il est dans la position fermée, au moyen d'un ou plusieurs joints d'étanchéité (601).

13. Accessoire (1) selon l'une ou plusieurs des revendications précédentes, **caractérisé en ce qu'**il est une fenêtre, le bras en forme de « C » permettant à l'élément de fermeture (101) de basculer autour de l'extrémité horizontale supérieure (202) de la fenêtre.

14. Accessoire (1) selon la revendication précédente, dans lequel la barrière (5) comprend une moustiquaire, l'élément de fermeture (101) étant constitué d'un matériau transparent, tel que le plexiglas.

15. Accessoire (1) selon l'une ou plusieurs des revendications 13 à 14, dans lequel la barrière (5) comprend une feuille obscurcissante en alternative à, ou en plus de la moustiquaire.

16. Accessoire (1) selon l'une ou plusieurs des revendications précédentes **caractérisé en ce qu'**il comprend en outre au moins un premier et un second mécanisme de rouleau contenu dans la structure de support, le premier mécanisme de rouleau étant constitué pour enrouler/dérouler une barrière du type rideau, film obscurcissant, film barrière ou similaires, le second mécanisme de rouleau étant constitué pour enrouler/dérouler une moustiquaire et des moyens de commande (4) pour enrouler/dérouler ledit rideau et ladite moustiquaire pour au moins fermer partiellement le second côté ouvert de l'espace.
